(19) **Europäisches Patentamt / European Patent Office / Office européen des brevets**

(11) **EP 4 681 930 A1**

(12) **EUROPEAN PATENT APPLICATION**
published in accordance with Art. 153(4) EPC

(43) Date of publication:
**21.01.2026  Bulletin 2026/04**

(21) Application number: **24774779.3**

(22) Date of filing: **12.03.2024**

(51) International Patent Classification (IPC):
**B41M 5/00** (2006.01)    **B41J 2/01** (2006.01)
**C09D 11/30** (2014.01)

(52) Cooperative Patent Classification (CPC):
**B41J 2/01; B41M 5/00; C09D 11/30**

(86) International application number:
**PCT/JP2024/009657**

(87) International publication number:
**WO 2024/195640 (26.09.2024 Gazette 2024/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **17.03.2023  JP 2023043644**

(71) Applicant: **FUJIFILM Corporation**
**Tokyo 106-8620 (JP)**

(72) Inventors:
• **SHIRAKI, Fumiya**
  **Ashigarakami-gun, Kanagawa 258-8577 (JP)**
• **UMEBAYASHI, Tsutomu**
  **Ashigarakami-gun, Kanagawa 258-8577 (JP)**

(74) Representative: **Klunker IP**
**Patentanwälte PartG mbB**
**Destouchesstraße 68**
**80796 München (DE)**

(54) **IMAGE RECORDING METHOD, METHOD FOR MANUFACTURING LAMINATE, AND IMAGE RECORDING APPARATUS**

(57)  An image recording method including: an image recording step of applying an ink onto a base material for image recording, which contains a polymer containing vinyl chloride as a constitutional unit, by an ink jet recording method, and irradiating the ink applied onto the base material for image recording with active energy ray X to obtain an image, in which, in the image recording step, a temperature of a surface of the base material for image recording, onto which the ink is landed, is 30°C or higher at a point in time when the ink is landed on the base material for image recording, and the ink contains a polymerizable monomer A having a (meth)acryloyl group and a solubility parameter of 16.5 MPa$^{1/2}$ to 21.3 MPa$^{1/2}$, and a colorant.

EP 4 681 930 A1

**Description**

**BACKGROUND OF THE INVENTION**

1. Field of the Invention

The present disclosure relates to an image recording method, a manufacturing method of a laminate, and an image recording apparatus.

2. Description of the Related Art

In the related art, various examinations have been conducted on image recording carried out using an ink.

For example, JP2021-161182A discloses an ink composition which is an active energy ray curable-type ink composition containing (A) a polymerizable compound, (B) a photopolymerization initiator, and (C) an ultraviolet absorber and/or (D) a radical scavenger, in which the (A) polymerizable compound includes a monofunctional polymerizable compound and a polyfunctional polymerizable compound, and the monofunctional polymerizable compound includes at least one monofunctional polymerizable compound (a) selected from the group consisting of a monofunctional polymerizable compound (a-1) which has a molecular weight of 250 g/mol or less and a melting point of 25°C or higher, a monofunctional polymerizable compound (a-2) which has a molecular weight of 250 g/mol or less, a melting point of lower than 25°C, and a viscosity of 20 mPa·s or more at 25°C, and a monofunctional polymerizable compound (a-3) other than the monofunctional polymerizable compound (a-1) and the monofunctional polymerizable compound (a-2), which has an amide group and a cyclic structure.

**SUMMARY OF THE INVENTION**

In some cases, a base material for lamination containing a polymer containing vinyl chloride as a constitutional unit (for example, polyvinyl chloride) is laminated directly or through another layer on an image in an image recorded material obtained by recording an image on a base material for image recording containing the polymer containing vinyl chloride as a constitutional unit, to produce a laminate. In this case, it may be required to further improve the peel strength of the obtained laminate (hereinafter, also referred to as "laminate peel strength").

The present disclosure has been made in consideration of such circumstances.

An object to be achieved by an embodiment of the present disclosure is to provide an image recording method, a manufacturing method of a laminate, and an image recording apparatus, which enable obtaining an image recorded material having excellent laminate peel strength.

The present disclosure includes the following aspects.

<1> An image recording method including:

an image recording step of applying an ink onto a base material for image recording, which contains a polymer containing vinyl chloride as a constitutional unit, by an ink jet recording method, and irradiating the ink applied onto the base material for image recording with active energy ray X to obtain an image,
in which, in the image recording step, a temperature of a surface of the base material for image recording, onto which the ink is landed, is 30°C or higher at a point in time when the ink is landed on the base material for image recording, and
the ink contains a polymerizable monomer A having a (meth)acryloyl group and a solubility parameter of 16.5 MPa$^{1/2}$ to 21.3 MPa$^{1/2}$, and a colorant.

<2> The image recording method according to <1>, in which, in the image recording step, the temperature of the surface of the base material for image recording, onto which the ink is landed, is 35°C to 45°C at a point in time when the ink is landed on the base material for image recording.

<3> The image recording method according to <1> or <2>, in which a time from a point in time when the ink has landed on the base material for image recording to a moment when the ink is irradiated with the active energy ray X is 0.05 seconds to 15.00 seconds.

<4> The image recording method according to any one of <1> to <3>, in which a time from a point in time when the ink has landed on the base material for image recording to a point in time when the ink is irradiated with the active energy ray X is 0.05 seconds to 3.00 seconds.

<5> The image recording method according to any one of <1> to <4>, in which an illuminance of the active energy ray X with which the ink is irradiated is 0.30 W/cm$^2$ or less.

<6> The image recording method according to any one of <1> to <5>, in which the image recording step further includes irradiating the image obtained by the irradiation with the active energy ray X with active energy ray Y.

<7> The image recording method according to any one of <1> to <6>, in which the ink does not contain a solvent, or in a case where the ink contains a solvent, a content of the solvent is 5% by mass or less with respect to a total amount of the ink.

<8> The image recording method according to any one of <1> to <7>, in which a molecular weight of the polymerizable monomer A is 215 or less.

<9> The image recording method according to any one of <1> to <8>, in which the ink further contains an N-vinyl compound.

<10> The image recording method according to any one of <1> to <9>, in which a weighted average value of glass transition temperatures of all polymerizable monomers contained in the ink as homopolymers is 0°C to 100°C.

<11> A method for producing a laminate, including:

> a step of obtaining an image recorded material in which the image is recorded on the base material for image recording by the image recording method according to any one of <1> to <10>; and
> a laminating step of laminating a base material for lamination containing a polymer containing vinyl chloride as a constitutional unit on the image in the image recorded material directly or through another layer.

<12> The manufacturing method of a laminate according to <11>,

in which, in the laminating step, the base material for lamination is directly laminated on the image.

<13> An image recording apparatus that is used for the image recording method according to any one of <1> to <10>, the image recording apparatus including:

> an ink jet head for applying the ink onto the base material for image recording;
> a base material heating mechanism for heating a surface of the base material for image recording, onto which the ink is landed, to 30°C or higher; and
> an irradiation device for irradiating the ink applied onto the base material for image recording with active energy ray X.

According to an embodiment of the present disclosure, it is possible to obtain an image recorded material having excellent laminate peel strength, and there are provided an image recording method, a manufacturing method of a laminate, and an image recording apparatus.

## BRIEF DESCRIPTION OF THE DRAWINGS

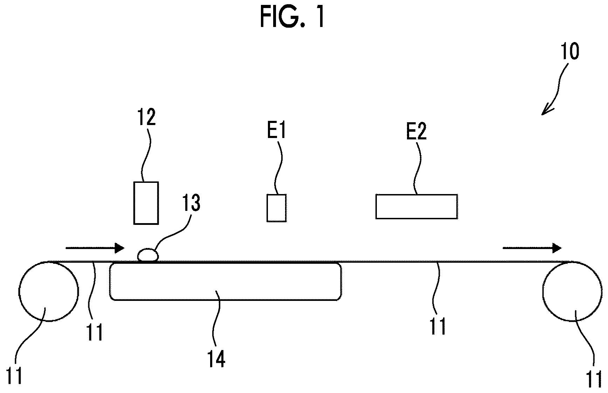

Fig. 1 is a diagram conceptually showing an example of an image recording apparatus used for performing an image recording method according to the present disclosure.

## DESCRIPTION OF THE PREFERRED EMBODIMENTS

Hereinafter, a manufacturing method of a laminate, an ink jet ink, an image recording method, and an image recording apparatus of the present disclosure will be described in detail.

In the present specification, the numerical ranges shown using "to" means ranges including the numerical values described before and after "to" as the minimum value and the maximum value.

In a numerical range described in a stepwise manner in the present specification, an upper limit value or a lower limit value described in a certain numerical range may be replaced with an upper limit value or a lower limit value in another numerical range described in a stepwise manner. Further, in a numerical range described in the present specification, an upper limit or a lower limit described in a certain numerical range may be replaced with a value described in an example.

In the present specification, in a case where a plurality of substances corresponding to respective components in a composition are present, the amount of the respective components in the composition indicates the total amount of the plurality of substances present in the composition unless otherwise specified.

In the present specification, a combination of two or more preferred aspects is a more preferred aspect.

In the present specification, the meaning of the term "step" includes not only an independent step but also a step whose intended purpose is achieved even in a case where the step is not clearly distinguished from other steps.

In the present specification, the term "image" denotes an entire film formed by applying a pretreatment liquid and an ink in this order, and the term "image recording" denotes formation of an image (that is, the film).

Further, the concept of "image" in the present specification also includes a solid image.

In the present specification, the concept of "(meth)acrylate" includes both acrylate and methacrylate. In addition, the concept of "(meth)acryl" includes both acryl and methacryl.

[Image recording method]

The image recording method of the present disclosure is an image recording method including:

an image recording step of applying an ink onto a base material for image recording, which contains a polymer containing vinyl chloride as a constitutional unit, by an ink jet recording method, and irradiating the ink applied onto the base material for image recording with active energy ray X to obtain an image,

in which, in the image recording step, a temperature of a surface of the base material for image recording, onto which the ink is landed, is 30°C or higher at a point in time when the ink is landed on the base material for image recording, and the ink contains a polymerizable monomer A having a (meth)acryloyl group and a solubility parameter of 16.5 MPa$^{1/2}$ to 21.3 MPa$^{1/2}$, and a colorant.

The image recording method according to the present disclosure may include other steps, as necessary.

According to the image recording method of the present disclosure, it is possible to obtain an image recorded material having excellent laminate peel strength.

In the present disclosure, the laminate peel strength of the image recorded material means a peel strength of a laminate in a case where a base material for lamination containing a polymer containing vinyl chloride as a constitutional unit is laminated directly or through another layer on the image in the image recorded material (that is, subjected to thermal fusion welding) to produce a laminate.

The reason why the effect of the laminate peel strength is exhibited is presumed as follows.

In order to improve the laminate peel strength, it is considered that it is effective to polymerize the polymerizable monomer in the ink in a state where the ink is appropriately infiltrated into the base material for image recording. This is because the adhesiveness between the base material for image recording and the ink (hereinafter, also referred to as an "ink film") applied to the base material for image recording is improved.

In a case where the ink is insufficiently infiltrated into the base material for image recording, it is considered that the adhesiveness between the ink film and the base material for image recording is insufficient, and as a result, the laminate peel strength is insufficient.

On the other hand, it is considered that the laminate peel strength is also decreased in a case where the ink is excessively infiltrated into the base material for image recording. The reason for this is that, in a case where the ink is excessively infiltrated into the base material for image recording, the polymerizable monomer is excessively infiltrated into the base material for image recording, and only a component (for example, a colorant) having no film-forming property remains on the base material for image recording, and thus the film thickness of the ink film is insufficient and the film hardness is insufficient.

In the image recording method of the present disclosure, it is considered that the infiltration of the ink into the base material for image recording can be accelerated in a case where the temperature of the surface of the base material for image recording onto which the ink is landed (hereinafter, also referred to as "temperature of the ink landing surface of the base material for image recording at a point in time of the ink landing") is 30°C or higher at the point in time of the ink landing on the base material for image recording.

Further, it is considered that, by defining the solubility parameter of the polymerizable monomer A contained in the ink to be 16.5 MPa$^{1/2}$ to 21.3 MPa$^{1/2}$, the affinity between the ink and the base material for image recording containing a polymer containing vinyl chloride as a constitutional unit is appropriate, and as a result, the infiltration of the ink into the base material for image recording is appropriate.

Further, it is considered that, in a case where the polymerizable monomer A contained in the ink is limited to a polymerizable monomer having a (meth)acryloyl group, the film hardness of the ink film after curing is secured in a case where the ink film is cured by polymerization of the polymerizable monomer, and as a result, excellent laminate peel strength is obtained.

In the image recording method of the present disclosure, it is considered that the above-described effects are combined to realize an excellent laminate peel strength.

<Base material for image recording>

A base material for image recording used in the image recording method according to the present disclosure contains a polymer including vinyl chloride as a constitutional unit.

The polymer including vinyl chloride as a constitutional unit may be a homopolymer of vinyl chloride (that is, polyvinyl chloride), or may be a copolymer including vinyl chloride and a monomer other than the vinyl chloride as a constitutional unit.

Examples of the copolymer including vinyl chloride and a monomer other than the vinyl chloride as a constitutional unit include a vinyl chloride-urethane copolymer, a vinyl chloride-ethylene copolymer, a vinyl chloride-vinyl acetate copolymer, a vinyl chloride-vinyl acetatemaleic acid copolymer, a vinyl chloride-vinyl acetate-vinyl alcohol copolymer, and a vinyl chloride-ethylene-vinyl acetate copolymer.

Among these, the base material for image recording preferably contains polyvinyl chloride.

The base material for image recording may contain a component other than the polymer including vinyl chloride as a constitutional unit. Examples of other components include a plasticizer, a stabilizer, an antioxidant, an ultraviolet absorbing agent, a binder resin, and a white pigment.

The base material for image recording may include a layer containing the polymer including vinyl chloride as a constitutional unit and a surface-treated layer, but from the viewpoint of obtaining the adhesiveness between the base material for image recording and the image by dissolving the ink in the base material for image recording, it is preferable that the base material for image recording does not include the surface-treated layer. That is, the surface of the base material for image recording to be applied with the ink preferably contains the polymer including vinyl chloride as a constitutional unit.

A thickness of the base material for image recording is not particularly limited, but is, for example, preferably 0.1 $\mu$m to 1,000 $\mu$m, more preferably 0.1 $\mu$m to 800 $\mu$m, and still more preferably 1 $\mu$m to 500 $\mu$m.

<Transport of base material for image recording>

It is preferable that the image recording method according to the present disclosure is performed while the base material for image recording is transported (for example, refer to an image recording apparatus 10 in Fig. 1 described later).

In this case, the transportation speed of the base material for image recording is preferably 2 m/min to 120 m/min, more preferably 30 m/min to 80 m/min, still more preferably 30 m/min to 70 m/min, and particularly preferably 40 m/min to 60 m/min.

In general, as the transportation speed of the base material for image recording is higher, there is an advantage in the productivity of image recording, but on the other hand, the time for the ink to permeate the base material for image recording is less likely to be ensured, and thus there is a tendency to be disadvantageous in the laminate peel strength.

However, in the image recording method of the present disclosure, since an ink containing a polymerizable monomer A having a (meth)acryloyl group and having a solubility parameter of 16.5 MPa$^{1/2}$ to 21.3 MPa$^{1/2}$ is used, and the temperature of the ink landing surface of the base material for image recording at the point in time of the ink landing is 30°C or higher, the laminate peel strength is secured even in a case where the transport speed of the base material for image recording is high (for example, 30 m/min or higher).

It is preferable that the base material for image recording is transported in a state where tension is applied and is wound in a state where tension is applied.

The tension during the transport may be the same tension as the tension during the winding or may be a tension different from the tension. In addition, the tension may vary depending on the position in the transport direction, or may be uniform.

The tension applied to the base material for image recording is preferably 1 N/m to 2000 N/m, more preferably 10 N/m to 1000 N/m, and still more preferably 50 N/m to 500 N/m.

In a case where the tension is 1 N/m or greater, fluttering of the base material for image recording during transport and the streak defect of the image can be further suppressed.

In a case where the tension is 2000 N/m or less, intercolor misregistration in a case of recording a polychromatic image using two or more inks can be further suppressed.

<Ink>

The ink used in the image recording method of the present disclosure contains a polymerizable monomer A having a (meth)acryloyl group and a solubility parameter of 16.5 MPa$^{1/2}$ to 21.3 MPa$^{1/2}$, and a colorant.

The ink may contain other components as necessary.

(Colorant)

The ink contains at least one colorant.

The colorant is not particularly limited, and can be optionally selected from known coloring materials such as a pigment, a water-soluble dye, and a dispersed dye. Among these, from the viewpoint of excellent weather fastness and rich color reproducibility, the colorant is preferably a pigment.

The type of the pigment is not particularly limited, and any of an organic pigment or an inorganic pigment may be used.

Examples of the pigment include pigments described in "Encyclopedia of Pigments" edited by Seishiro Ito (2000), "Industrial Organic Pigments", W. Herbst, K. Hunger, JP2002-12607A, JP2002-188025A, JP2003-26978A, and JP2003-342503A.

In a case where the ink contains a pigment as the colorant, the ink may contain a dispersant as necessary.

For the colorant such as a pigment and the pigment dispersant, known documents such as paragraphs 0152 to 0158 of JP2011-225848A and paragraphs 0132 to 0149 of JP2009-209352A can be appropriately referred to.

In a case where the ink contains a pigment as a colorant and a dispersant, the ink may contain a resin-coated pigment in which the pigment is coated with a resin as a dispersant, as the pigment and the dispersant.

Examples of the resin-coated pigment include a poly(vinyl chloride-co-vinyl acetate) (PVC-VA) resin-coated pigment.

The PVC-VA resin-coated pigment is a pigment in which a crude pigment is coated with a poly(vinyl chloride-co-vinyl acetate) resin (that is, a vinyl-chloride/vinyl acetate copolymer resin).

Examples of the PVC-VA resin-coated pigment include a PVC-VA resin-coated cyan pigment "Microlith BLUE 7080K" manufactured by DIC Corporation.

A content of the colorant with respect to the total amount of the ink is preferably 0.1% by mass to 20% by mass and more preferably 0.5% by mass to 10% by mass.

(Polymerizable monomer A)

The ink contains at least one polymerizable monomer A.

The polymerizable monomer A is a polymerizable monomer having a (meth)acryloyl group and having a solubility parameter (hereinafter, also referred to as "SP value") of 16.5 $MPa^{1/2}$ to 21.3 $MPa^{1/2}$.

The SP value of the polymerizable monomer A is 16.5 $MPa^{1/2}$ to 21.3 $MPa^{1/2}$.

As a result, polymerization of the polymerizable monomer A proceeds in a state in which the ink is moderately immersed in the base material for image recording, and an image having excellent adhesiveness to the base material for image recording is obtained, whereby excellent laminate peel strength is achieved.

The SP value of the polymerizable monomer A is preferably 18 $MPa^{1/2}$ to 19.5 $MPa^{1/2}$.

In the present disclosure, the SP value (that is, the solubility parameter) of the polymerizable monomer A means a Hansen solubility parameter.

The Hansen solubility parameters are obtained by dividing the solubility parameters introduced by Hildebrand into three components, a dispersion element $\delta d$, a polarity element $\delta p$, and a hydrogen bond element $\delta h$, and expressing the parameters in a three-dimensional space.

The SP value $\delta$ of the polymerizable monomer A is a value calculated by the following expression (A).

$$\text{SP value } (\delta)\ [MPa^{1/2}] = (\delta d^2 + \delta p^2 + \delta h^2)^{1/2} \ ... \ (A)$$

The dispersion element $\delta d$, the polarity element $\delta p$, and the hydrogen bond element $\delta h$ are calculated using HSPiP (version 4.1.07) software.

The polymerizable monomer A has a (meth)acryloyl group (preferably an acryloyl group).

As a result, the polymerizable monomer A has excellent polymerizability. As a result, the ink has excellent curing properties.

From the viewpoint of further improving the curing properties of the ink (that is, viewpoint that the polymerizable monomer A has polymerizability), the polymerizable monomer A preferably has a (meth)acryloyloxy group (preferably an acryloyloxy group).

The number of (meth)acryloyl groups included in the polymerizable monomer A may be only 1 or 2 or more, but is preferably only 1.

A molecular weight of the polymerizable monomer A is preferably 215 or less.

As a result, the ink is more likely to be immersed in the base material for image recording, so that the adhesiveness of the image to the base material for image recording is further improved. Furthermore, since a distance between crosslinking points is shortened, a density of the ink film is further improved. As a result, the laminate peel strength is further improved.

The molecular weight of the polymerizable monomer A is more preferably 205 or less and still more preferably 200 or less.

Examples of the polymerizable monomer A include the following compounds.

Tetrahydrofurfuryl acrylate (SP value: 18.8 $MPa^{1/2}$)
Cyclic trimethylolpropane formal acrylate (SP value: 19.0 $MPa^{1/2}$)

Ethoxydiethylene glycol acrylate (SP value: 18.2 MPa$^{1/2}$)
Cyclohexyl acrylate (SP value: 17.9 MPa$^{1/2}$)
Isobornyl acrylate (SP value: 17.1 MPa$^{1/2}$)
Phenoxyethyl acrylate (SP value: 19.44 MPa$^{1/2}$)
N,N-Dimethylacrylamide (SP value: 21.4 MPa$^{1/2}$)
4-tert-Butylcyclohexyl acrylate (SP value: 16.7 MPa$^{1/2}$)
3,3,5-Trimethylcyclohexyl acrylate (SP value: 16.7 MPa$^{1/2}$)
4-Hydroxybutyl acrylate (SP value: 21.0 MPa$^{1/2}$)
(2-Methyl-2-ethyl-1,3-dioxolan-4-yl)methyl acrylate (SP value: 18.2 MPa$^{1/2}$)
Benzyl acrylate (SP value: 19.0 MPa$^{1/2}$)
(3-Ethyloxetan-3-yl)methyl acrylate (SP value: 18.6 MPa$^{1/2}$)
2-Oxotetrahydrofuran-3-yl acrylate (SP value: 21.2 MPa$^{1/2}$)
Lauryl acrylate (SP value: 16.7 MPa$^{1/2}$)

Among these, from the viewpoint of improving the adhesiveness to the base material for image recording and the adhesiveness to the base material for lamination, the polymerizable monomer A preferably includes at least one selected from the group consisting of tetrahydrofurfuryl acrylate, cyclic trimethylolpropane formal acrylate, cyclohexyl acrylate, and ethoxydiethylene glycol acrylate; more preferably includes at least one selected from the group consisting of cyclic trimethylolpropane formal acrylate, cyclohexyl acrylate, and ethoxydiethylene glycol acrylate; and still more preferably includes at least one selected from the group consisting of cyclohexyl acrylate and ethoxydiethylene glycol acrylate.

A content of the polymerizable monomer A is preferably 30% by mass to 75% by mass, more preferably 40% by mass to 70% by mass, and still more preferably 44% by mass to 63% by mass with respect to the total amount of the ink.

(N-vinyl compound)

The ink preferably contains at least one N-vinyl compound.

As a result, the adhesiveness between the image and the base material for image recording is further improved, accordingly, the laminate peel strength is further improved.

The N-vinyl compound is a compound in which a vinyl group is bonded to a nitrogen atom, and is classified as a polymerizable monomer.

Same as the polymerizable monomer A, the N-vinyl compound is a compound having an SP value corresponding to 16.5 MPa$^{1/2}$ to 21.3 MPa$^{1/2}$. Therefore, the N-vinyl compound contributes to the adhesiveness between the base material for image recording and the image.

Examples of the N-vinyl compound include N-vinylpyrrolidone, N-vinylcaprolactam, N-vinylcarbazole, N-vinylimidazole, N-vinylphthalimide, N-vinylacetamide, N-vinylformamide, and 5-methyl-3-vinyl-2-oxazolidinone.

Among these, from the viewpoint of high solubility in the base material for image recording and improvement of the adhesiveness between the base material for image recording and the image, the N-vinyl compound is preferably at least one selected from the group consisting of N-vinylcaprolactam and 5-methyl-3-vinyl-2-oxazolidinone.

A content of the N-vinyl compound is preferably 10% by mass to 50% by mass, more preferably 15% by mass to 40% by mass, and still more preferably 20% by mass to 30% by mass with respect to the total amount of the ink.

A mass ratio of the content of the N-vinyl compound with respect to the content of the polymerizable monomer A is preferably 0.30 or more, more preferably 0.35 or more, and still more preferably 0.50 or more. In a case where the above-described mass ratio is 0.30 or more, the curing properties of the ink are improved, and the adhesiveness between the image and the base material for lamination is further improved.

The N-vinyl compound tends to have a high glass transition temperature in a case of being a homopolymer. Therefore, the upper limit value of the above-described mass ratio is not particularly limited, but from the viewpoint of obtaining thermal plasticity in the ink film, the mass ratio of the content of the N-vinyl compound with respect to the content of the polymerizable monomer A is preferably 0.30 to 0.80, more preferably 0.35 to 0.75, and still more preferably 0.5 to 0.70.

A proportion of the total of the polymerizable monomer A and the N-vinyl compound with respect to all polymerizable monomers contained in the ink is preferably 80% by mass or more and more preferably 90% by mass or more. The upper limit value of the above-described proportion is not particularly limited, and the above-described proportion may be 100% by mass. That is, all polymerizable compounds contained in the ink may be the polymerizable monomer A and the N-vinyl compound.

(Other polymerizable monomers)

The ink may contain a polymerizable monomer in addition to the polymerizable monomer A and the N-vinyl compound as other polymerizable monomers (hereinafter, also referred to as "other monomers").

A polymerizable group included in the other polymerizable monomers is preferably a radically polymerizable group, more preferably a photoradically polymerizable group, and still more preferably an ethylenically unsaturated group. Examples of the other polymerizable monomers include a (meth)acrylate compound, a (meth)acrylamide compound, a vinyl ether compound, an allyl compound, and an unsaturated carboxylic acid.

A proportion of the polymerizable monomer having a molecular weight of 205 or less with respect to all polymerizable monomers contained in the ink is preferably 80% by mass or more, and more preferably 90% by mass or more. In a case where the above-described proportion is 80% by mass or more, the solubility of the ink in the base material for image recording is high, and the adhesiveness between the base material for image recording and the image is improved. The upper limit value of the above-described proportion is not particularly limited, and the above-described proportion may be 100% by mass. That is, all polymerizable compounds contained in the ink may be the polymerizable monomer having a molecular weight of 205 or less.

The "polymerizable monomer" mentioned herein means a compound having at least one polymerizable group, and the molecular weight thereof is not particularly limited.

The proportion of the monofunctional polymerizable monomer (that is, a polymerizable monomer having one polymerizable group, and the same applies hereinafter) in all the polymerizable monomers contained in the ink is preferably 90% by mass or more and more preferably 92% by mass or more. In a case where the above-described proportion is 90% by mass or more, cure shrinkage due to residual stress is suppressed, and the adhesiveness between the base material for image recording and the image is improved. The upper limit value of the above-described proportion is not particularly limited, and the above-described proportion may be 100% by mass. That is, all the polymerizable monomers contained in the ink may be monofunctional polymerizable monomers.

(Weighted average value of glass transition temperatures in case of being used as homopolymer)

A weighted average value of glass transition temperatures of all polymerizable monomers contained in the ink as homopolymers is preferably 0°C to 100°C, more preferably 5°C to 50°C, and still more preferably 10°C to 30°C.

In a case where the above-described weighted average value is 0°C to 100°C, since the ink film (that is, the image) obtained by curing the ink has more excellent thermal plasticity, the adhesiveness between the image and the base material for lamination is further improved.

The glass transition temperature of the polymerizable monomer as homopolymer is measured by the following method. The "polymerizable monomer" herein refers to a compound having a polymerizable group and having a molecular weight of 1,000 or less.

First, a homopolymer having a weight-average molecular weight of 10,000 to 20,000 is produced using the polymerizable monomer. A glass transition temperature of the produced homopolymer is measured according to the method described in JIS K 7121:2012.

In the present disclosure, the glass transition temperature is measured using a differential scanning calorimeter, for example, using a product name "DSC-60" manufactured by Shimadzu Corporation.

In the present disclosure, the weight-average molecular weight is measured by gel permeation chromatography (GPC). For example, HLC-8220GPC (manufactured by Tosoh Corporation) is used as GPC, three columns of TSKgel, SuperMultipore HZ-H (manufactured by Tosoh Corporation; 4.6 mmID x 15 cm) are used as a column, and tetrahydrofuran (THF) is used as an eluent. As the conditions, a sample concentration of 0.45% by mass, a flow rate of 0.35 ml/min, a sample injection amount of 10 $\mu$l, and a measurement temperature of 40°C are set, and a differential refractive index (RI) detector is used for detection. A calibration curve is obtained from, as a standard sample, eight samples of product names "TSK Standard polystyrene" manufactured by Tosoh Corporation: "F-40", "F-20", "F-4", "F-1", "A-5000", "A-2500", "A-1000", and "n-propylbenzene".

The glass transition temperature of the homopolymer varies depending on the weight-average molecular weight of the homopolymer, but the variation is negligibly small in a case where the weight-average molecular weight is 10,000 to 20,000.

The weighted average value of the glass transition temperatures is calculated by the following expression.

In the expression, $T_i$ represents a glass transition temperature of an i-th polymerizable monomer contained in the ink as a homopolymer, and $C_i$ represents a content (% by mass) of the i-th polymerizable monomer with respect to the total amount of the ink.

$$\text{Weighted average value of glass transition temperatures} = \Sigma T_i C_i / \Sigma C_i$$

(Polymerization initiator)

The ink preferably contains at least one polymerization initiator.

As the polymerization initiator, a photoradical polymerization initiator which absorbs light to generate a radical as a polymerization initiation species is preferable.

Examples of the polymerization initiator include an alkylphenone compound, an acylphosphine compound, an aromatic onium salt compound, an organic peroxide, a thio compound, a hexaarylbiimidazole compound, a ketoxime ester compound, a borate compound, an azinium compound, a metallocene compound, an active ester compound, a carbon halogen bond-containing compound, and an alkylamine compound.

Among these, as the polymerization initiator, at least one compound selected from the group consisting of an acylphosphine compound and a thio compound is preferable, and at least one compound selected from the group consisting of an acylphosphine oxide compound and a thioxanthone compound is more preferable. It is still more preferable to use an acylphosphine oxide compound and a thioxanthone compound in combination.

Examples of the acylphosphine oxide compound include a monoacylphosphine oxide compound and a bisacylphosphine oxide compound. The acylphosphine oxide compound is preferably a bisacylphosphine oxide compound.

Examples of the monoacylphosphine oxide compound include isobutyryl diphenylphosphine oxide, 2-ethylhexanoyldiphenylphosphine oxide, 2,4,6-trimethylbenzoyldiphenylphosphine oxide, (2,4,6-trimethylbenzoyl)ethoxyphenylphosphine oxide, o-toluyldiphenylphosphine oxide, p-t-butylbenzoyldiphenylphosphine oxide, 3-pyridylcarbonyldiphenylphosphine oxide, acryloyl diphenylphosphine oxide, benzoyl diphenylphosphine oxide, pivaloyl phenylphosphinic acid vinyl ester, adipoyl bisdiphenylphosphine oxide, pivaloyl diphenylphosphine oxide, p-toluyldiphenylphosphine oxide, 4-(t-butyl)benzoyldiphenylphosphine oxide, terephthaloyl bisdiphenylphosphine oxide, 2-methylbenzoyldiphenylphosphine oxide, versatoyl diphenylphosphine oxide, 2-methyl-2-ethylhexanoyldiphenylphosphine oxide, 1-methyl-cyclohexanoyldiphenylphosphine oxide, pivaloyl phenylphosphinic acid methyl ester, and pivaloyl phenylphosphinic acid isopropyl ester.

Examples of the bisacylphosphine oxide compound include bis(2,6-dichlorobenzoyl)phenylphosphine oxide, bis(2,6-dichlorobenzoyl)-2,5-dimethylphenylphosphine oxide, bis(2,6-dichlorobenzoyl)-4-ethoxyphenylphosphine oxide, bis(2,6-dichlorobenzoyl)-4-propylphenylphosphine oxide, bis(2,6-dichlorobenzoyl)-2-naphthylphosphine oxide, bis(2,6-dichlorobenzoyl)-1-naphthylphosphine oxide, bis(2,6-dichlorobenzoyl)-4-chlorophenylphosphine oxide, bis(2,6-dichlorobenzoyl)-2,4-dimethoxyphenylphosphine oxide, bis(2,6-dichlorobenzoyl)decylphosphine oxide, bis(2,6-dichlorobenzoyl)-4-octylphenylphosphine oxide, bis(2,4,6-trimethylbenzoyl)phenylphosphine oxide, bis(2,4,6-trimethylbenzoyl)-2,5-dimethylphenylphosphine oxide, bis(2,6-dichloro-3,4,5-trimethoxybenzoyl)-2,5-dimethylphenylphosphine oxide, bis(2,6-dichloro-3,4,5-trimethoxybenzoyl)-4-ethoxyphenylphosphine oxide, bis(2-methyl-1-naphthoyl)-2,5-dimethylphenylphosphine oxide, bis(2-methyl-1-naphthoyl)-4-ethoxyphenylphosphine oxide, bis(2-methyl-1-naphthoyl)-2-naphthylphosphine oxide, bis(2-methyl-1-naphthoyl)-4-propylphenylphosphine oxide, bis(2-methyl-1-naphthoyl)-2,5-dimethylphenylphosphine oxide, bis(2-methoxy-1-naphthoyl)-4-ethoxyphenylphosphine oxide, bis(2-chloro-1-naphthoyl)-2,5-dimethylphenylphosphine oxide, and bis(2,6-dimethoxybenzoyl)-2,4,4-trimethylpentylphosphine oxide.

Among these, as the acylphosphine oxide compound, it is preferable to include at least one selected from the group consisting of bis(2,4,6-trimethylbenzoyl)phenylphosphine oxide (product name "Omnirad 819", manufactured by IGM Resins B.V.) and 2,4,6-trimethylbenzoyldiphenylphosphine oxide (product name "Omnirad TPO-H", manufactured by IGM Resins B.V.).

Examples of the thioxanthone compound include thioxanthone, 2-isopropylthioxanthone, 4-isopropylthioxanthone, 2-chlorothioxanthone, 2,4-dichlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3-(2-methoxyethoxycarbonyl) thioxanthone, 4-butoxycarbonylthioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminthioxanthone, 1-ethoxycarbonyl-3-phenylsulfurylthioxanthone, 3,4-di[2-(2-methoxyethoxy)ethoxycarbonyl]thioxanthone, 1-ethoxycarbonyl-3-(1-methyl-1-morpholinoethyl)thioxanthone, 2-methyl-6-dimethoxymethylthioxanthone, 2-methyl-6-(1,1-dimethoxybenzyl)thioxanthone, 2-morpholinomethylthioxanthone, 2-methyl-6-morpholinomethylthioxanthone, n-allylthioxanthone-3,4-dicarboxylimide, n-octylthioxanthone-3,4-dicarboxylimide, N-(1,1,3,3-tetramethylbutyl)thioxanthone-3,4-dicarboxylimide, 1-phenoxythioxanthone, 6-ethoxycarbonyl-2-methoxythioxanthone, 6-ethoxycarbonyl-2-methylthioxanthone, thioxanthone-2-polyethylene glycol ester, and 2-hydroxy-3-(3,4-dimethyl-9-oxo-9H-thioxanthone-2-yl)oxy-N,N,N-trimethyl-1-propanaminium chloride.

The thioxanthone compound may be a commercially available product. Examples of the commercially available product include SPEEDCURE series (for example, SPEEDCURE 7010, SPEEDCURE CPTX, SPEEDCURE ITX, and the like) manufactured by Lambson.

In a case where the ink contains a polymerization initiator, from the viewpoint of improving the curing properties of the ink, a content of the polymerization initiator is preferably 2% by mass or more and more preferably 5% by mass or more with respect to the total amount of the ink. The upper limit of the content of the polymerization initiator is not particularly limited, but for example, it is 10% by mass.

(Surfactant)

The ink may contain at least one surfactant. However, from the viewpoint of improving the affinity between the base material for image recording and the ink, it is preferable that the ink does not contain a surfactant, or a content of the surfactant with respect to the total amount of the ink is less than 0.1% by mass. In a case where the ink contains a surfactant, as the surfactant, a generally known surfactant can be used.

(Polymerization inhibitor)

The ink according to the present disclosure preferably contains at least one polymerization inhibitor.

Examples of the polymerization inhibitor include p-methoxyphenol, quinones (for example, hydroquinone, benzoquinone, and methoxybenzoquinone), phenothiazine, catechols, alkylphenols (for example, dibutyl hydroxy toluene (BHT)), alkyl bisphenols, zinc dimethyldithiocarbamate, copper dimethyldithiocarbamate, copper dibutyldithiocarbamate, copper salicylate, thiodipropionic acid esters, mercaptobenzimidazole, phosphites, 2,2,6,6-tetramethylpiperidine-1-oxyl (TEMPO), 2,2,6,6-tetramethyl-4-hydroxypiperidine-1-oxyl (TEMPOL), and tris(N-nitroso-N-phenylhydroxylamine)aluminum salt (also known as Cupferron Al).

Among these, as the polymerization inhibitor, it is preferable to include at least one selected from the group consisting of p-methoxyphenol, catechols, quinones, alkylphenols, TEMPO, TEMPOL, and tris(N-nitroso-N-phenylhydroxylamine)aluminum salt; and it is more preferable to include at least one selected from the group consisting of p-methoxyphenol, hydroquinone, benzoquinone, BHT, TEMPO, TEMPOL, and tris(N-nitroso-N-phenylhydroxylamine)aluminum salt.

In a case where the ink contains a polymerization inhibitor, a content of the polymerization inhibitor is preferably 0.01% by mass to 2.0% by mass, more preferably 0.02% by mass to 1.0% by mass, and still more preferably 0.03% by mass to 0.5% by mass with respect to the total amount of the ink.

(Resin)

The ink may contain at least one resin.

Examples of the resin include an epoxy resin, a vinyl chloride-based resin, a polyester resin, a (meth)acrylic resin, chlorinated polyolefin, and a polyketone.

The vinyl chloride-based resin means a polymer including vinyl chloride as a constitutional unit. The vinyl chloride-based resin may be a homopolymer of vinyl chloride (that is, polyvinyl chloride), or may be a copolymer including vinyl chloride and a monomer other than the vinyl chloride as a constitutional unit.

Examples of a commercially available product of the vinyl chloride-based resin include UCAR Solution Vinyl Resin VYHD, VYHH, VMCA, VROH, and VYLF-X manufactured by Dow Chemical Company; SOLBIN resin CL, CNL, C5R, and TA5R manufactured by Nissin Chemical Co., Ltd.; and VINNOL (registered trademark) E15/40, E15/45, H14/36, H15/42, H15/50, H11/59, H40/43, H40/50, H40/55, H40/60, H15/45M, E15/45M, and E15/40A manufactured by Wacker Chemie AG.

Examples of a commercially available product of the polyester resin include Elitel series manufactured by UNITIKA Ltd.; VYLON series manufactured by TOYOBO Co., Ltd.; Espel series manufactured by Hitachi Chemical Co., Ltd.; and TEGO (registered trademark) addbond series manufactured by Evonik Industries AG.

Examples of the (meth)acrylic resin include a copolymer of methyl methacrylate and n-butyl methacrylate.

Examples of a commercially available product of the (meth)acrylic resin include Elvacite 2013 (a copolymer of methyl methacrylate and n-butyl methacrylate, Mw = 34,000), Elvacite 2014 (a copolymer of methyl methacrylate and n-butyl methacrylate, Mw = 119,000), and Elvacite 4099 (a copolymer of methyl methacrylate and n-butyl methacrylate, Mw = 15,000) manufactured by Lucite International Alpha B.V.; and DIANAL (registered trademark) BR-113 (butyl methacrylate resin, Mw = 30,000) manufactured by Mitsubishi Chemical Corporation.

Examples of a commercially available product of the chlorinated polyolefin include SUPERCHLON (registered trademark) 814HS manufactured by Nippon Paper Industries Co., Ltd.

Examples of a commercially available product of the polyketone include TEGO (registered trademark) VARIPLUS AP, CA, and SK manufactured by Evonik Industries AG.

Among these, the ink preferably contains at least one selected from the group consisting of a vinyl chloride-vinyl acetate copolymer and a polyester resin. The vinyl chloride-vinyl acetate copolymer and the polyester resin have excellent affinity for the base material for image recording, and in a case where the ink contains these resins, the solubility of the ink in the base material for image recording is increased, and the adhesiveness between the base material for image recording and the image is improved.

A weight-average molecular weight (Mw) of the resin is preferably 1,000 to 70,000 and more preferably 5,000 to 50,000.

In a case where the ink contains the resin, a content of the resin is preferably 1% by mass to 10% by mass, more preferably 1.5% by mass to 8% by mass, and still more preferably 2% by mass to 6% by mass with respect to the total amount of the ink.

(Solvent)

The ink contains no solvent, or in a case of containing the solvent, a content of the solvent with respect to the total amount of the ink is preferably 5% by mass or less (more preferably 3% by mass or less, still more preferably 2% by mass or less, and even more preferably 1% by mass or less).

The term "solvent" herein includes both an organic solvent and an inorganic solvent (for example, water).

(Other components)

The ink may contain a component other than those described above.

Examples of the other components include an ultraviolet absorber, a co-sensitizer, an antioxidant, a fading inhibitor, and a conductive salt.

With regard to the other components, reference can be appropriately made to known documents, for example, JP2011-225848A, JP2009-209352A, and the like.

(Physical properties of ink)

From the viewpoint of jettability, a viscosity of the ink is preferably 5 mPa·s to 50 mPa·s, more preferably 10 mPa·s to 30 mPa·s, and still more preferably 10 mPa·s to 25 mPa·s.

The viscosity means a value measured at 25°C.

The viscosity is a value measured using a viscometer, and can be measured using, for example, VISCOMETER RE-85L (manufactured by TOKI SANGYO CO., LTD.).

From the viewpoint of jettability, a surface tension of the ink is preferably 60 mN/m or less, more preferably 20 mN/m to 50 mN/m, and still more preferably 25 mN/m to 45 mN/m.

The surface tension means a value measured at 25°C.

The surface tension is a value measured using a surface tensiometer, and can be measured using, for example, product name "Automatic Surface Tentiometer CBVP-Z (manufactured by Kyowa Interface Science Co., Ltd.)".

<Ink application method>

In the image recording step, the above-described ink is applied onto the above-described base material for image recording by an ink jet recording method.

The ejection method of the ink by the ink jet recording method is not particularly limited, and for example, any known methods such as an electric charge control method of jetting the ink using electrostatic attraction force, a drop-on-demand method (pressure pulse method) using vibration pressure of a piezoelectric element, an acoustic ink jet method of converting an electric signal into an acoustic beam, irradiating the ink with the acoustic beam, and jetting the ink by using radiation pressure, a thermal ink jet method (BUBBLE JET (registered trademark)) of heating the ink, forming air bubbles, and using generated pressure, and the like may be used.

As the ink jet recording method, particularly, it is possible to effectively use the method described in JP1979-59936A (JP-S54-59936A), which is an ink jet recording method of causing an ink to experience a rapid volume change by the action of thermal energy and jetting the ink from a nozzle by using the acting force resulting from the change of state. As the ink jet recording method, a method described in paragraphs 0093 to 0105 of JP2003-306623A can also be applied.

The application of the ink onto the base material for image recording by the ink jet recording method can be performed by allowing the ink to be jetted from a nozzle of an ink jet head.

The way of using the ink jet head also includes a shuttle method of performing recording while a short serial head is allowed to scan in a width direction of the recorded medium, and a line method of using a line head in which recording elements are arranged correspondingly to the entire range of one side of the recorded medium.

In the line method, image recording can be performed on the entire surface of the recorded medium by scanning the recorded medium in a direction intersecting the direction in which the recording elements are aligned. In the line method, a transport system such as a carriage that allows the short head to perform scanning in the shuttle method is unnecessary. In addition, in the line method, as compared with the shuttle method, a carriage is not required to move, and a complicated scanning control with the recorded medium is unnecessary, and only the recorded medium moves. Therefore, according to the line method, an increase in the recording speed of an image is achieved as compared with the shuttle method.

However, the method of the ink jet head in the image recording method according to the present disclosure is not limited to the line method, and may be a shuttle method. In any method applied, the effect of the image recording method according to the present disclosure is exhibited.

The ink is preferably applied using an ink jet head having a resolution of 300 dpi or more (more preferably 600 dpi or more and still more preferably 800 dpi or more). Here, dpi is an abbreviation for dot per inch, and 1 inch is 2.54 cm.

From the viewpoint of obtaining a high-definition image, the amount of liquid droplets of the ink jetted from nozzles of the ink jet head is preferably 1 picoliter (pL) to 10 pL and more preferably 1.5 pL to 6 pL.

<Temperature of ink landing surface of base material for image recording at time of ink landing>

In the image recording step, the temperature of the ink landing surface of the base material for image recording at the point in time of the ink landing (that is, the temperature of the surface of the base material for image recording on which the ink lands at the point in time of the ink landing on the base material for image recording) is 30°C or higher.

In this manner, the infiltration of the ink into the base material for image recording is promoted, and as a result, the laminate peel strength of the obtained image recorded material is improved.

In the image recording step, preferably, the base material for image recording is heated by a base material heating mechanism for heating the base material for image recording, prior to the application of the ink from the ink jet head. In this manner, it is easier to realize that the temperature of the ink landing surface of the base material for image recording at the point in time of the ink landing is 30°C or higher (for example, refer to Fig. 1 of the image recording apparatus 10 described later).

Examples of the base material heating mechanism include a rubber heater, a hot plate, a heating furnace, a hot air drying device, and an infrared heating device.

The base material for image recording can be heated by heating the ink from at least one of the ink landing surface side or the ink non-landing surface side of the base material for image recording.

The temperature of the ink landing surface of the base material for image recording at the point in time of the ink landing can be measured by an infrared radiation thermometer.

The temperature of the ink landing surface of the base material for image recording at the point in time of the ink landing is preferably in a range of 30°C to 50°C and more preferably in a range of 35°C to 45°C.

In a case where the temperature is 50°C or lower, excessive infiltration of the ink into the base material for image recording is suppressed, and as a result, the laminate peel strength of the obtained image recorded material is improved.

<Irradiation with active energy ray X>

In the image recording step, the ink (that is, the ink film) applied onto the base material for image recording is irradiated with the active energy ray X to obtain an image.

In the present disclosure, the active energy ray X means an active energy ray with which the ink film is initially irradiated. In this sense, the active energy ray X is distinguished from, for example, active energy ray Y described later.

By irradiating the ink film on the base material for image recording with the active energy ray X, a polymerization reaction of the polymerizable monomers contained in the ink film proceeds. The ink film is cured by the progress of the polymerization reaction, and an image is obtained.

Examples of the active energy ray X include ultraviolet rays, visible rays, and electron beams. Among these, ultraviolet rays are preferable as the active energy ray X.

A peak wavelength of the ultraviolet rays is preferably 200 nm to 405 nm, more preferably 220 nm to 390 nm, and still more preferably 220 nm to 380 nm.

The exposure amount of ultraviolet rays is preferably 20 mJ/cm$^2$ to 5 J/cm$^2$ and more preferably 100 mJ/cm$^2$ to 1,500 mJ/cm$^2$. As irradiation conditions and basic irradiation method, irradiation conditions and irradiation method described in JP1985-132767A (JP-S60-132767A) can be adopted. Specifically, the irradiation method is preferably a method of providing a light source on both sides of a head unit including an ink jet device and scanning the substrate by the head unit and the light source by a so-called shuttle method, or a method of irradiating the substrate with another light source that is not involved in driving.

As a light source for the ultraviolet irradiation, a discharge lamp or a laser light source (such as a gas laser and a solid-state laser) is mainly used, and as the discharge lamp, for example, a mercury lamp, a metal halide lamp, and an ultraviolet fluorescent lamp are widely known. In addition, a semiconductor light source such as ultraviolet light emitting diode (UV-LED) and ultraviolet laser diode (UV-LD) is expected as the light source for the ultraviolet irradiation because it is compact, has long service life and high efficiency, and is inexpensive. Among these, a metal halide lamp, a high-pressure mercury lamp, a medium-pressure mercury lamp, a low-pressure mercury lamp, or UV-LED is preferable as the light source for the ultraviolet irradiation.

The illuminance of the active energy ray X with which the ink film is irradiated is preferably 1.00 $W/cm^2$ or less, more preferably 0.50 $W/cm^2$ or less, and still more preferably 0.30 $W/cm^2$ or less.

In a case where the illuminance of the active energy ray X with which the ink film is irradiated is 1.00 $W/cm^2$ or less, an excessive polymerization reaction of the polymerizable monomer is suppressed, infiltration of the ink into the base material for image recording is promoted, and as a result, the laminate peel strength is further improved. Further, the deformation of the base material for image recording due to the reaction heat of the polymerization reaction of the polymerizable monomer (hereinafter, also referred to as "base material deformation") is further suppressed.

On the other hand, from the viewpoint of the progress of the polymerization reaction of the polymerizable monomer and the curing of the ink film, the lower limit of the illuminance of the active energy ray X with which the ink film is irradiated is preferably 0.10 $W/cm^2$.

In the present disclosure, both the illuminance of the active energy ray X and the illuminance of the active energy ray Y mean the sum of the UVA illuminance and the UVV illuminance.

<Time from point in time of ink landing to active energy ray X irradiation>

In the image recording step, the time from the point in time of the ink landing to the irradiation with the active energy ray X (that is, the time from the point in time of the ink landing on the base material for image recording to the time of irradiation of the ink with the active energy ray X, and the same applies hereinafter) is preferably 0.04 seconds to 16.00 seconds, more preferably 0.05 seconds to 15.00 seconds, and still more preferably 0.05 seconds to 3.00 seconds.

In a case where the time from the point in time of the ink landing to the irradiation with the active energy ray X is 0.04 seconds or longer, insufficient infiltration of the ink into the base material for image recording is suppressed, and as a result, the laminate peel strength of the obtained image recorded material is improved.

In a case where the time from the point in time of the ink landing to the irradiation with the active energy ray X is 16.00 seconds or less, excessive infiltration of the ink into the base material for image recording is suppressed, and as a result, the laminate peel strength of the obtained image recorded material is improved.

The time from the point in time of the ink landing to the irradiation with the active energy ray X can be adjusted by, for example, adjusting the transport speed of the base material for image recording in the image recording apparatus, the distance between the ink jet head and the active energy ray X irradiation device, and the like.

<Irradiation with active energy ray Y>

The image recording step preferably includes further irradiating the image obtained by the irradiation with the active energy ray X with the active energy ray Y.

In this manner, the polymerization reaction of the polymerizable monomers contained in the image and the curing of the image can be further advanced. As a result, the film hardness of the image can be improved, and the laminate peel strength can be further improved.

The preferred aspect of the active energy ray Y is the same as the preferred aspect of the active energy ray X described above.

However, specific aspects of each of the active energy ray X and the active energy ray Y may be the same as or different from each other.

It is preferable that the illuminance of the active energy ray Y with which the image is irradiated is higher than the illuminance of the active energy ray X.

In this manner, the effect of the irradiation with the active energy ray Y can be more effectively obtained.

The illuminance of the active energy ray Y is preferably 0.1 $W/cm^2$ to 12.0 $W/cm^2$, more preferably 0.5 $W/cm^2$ to 8.0 $W/cm^2$, and still more preferably 1.0 $W/cm^2$ to 4.0 $W/cm^2$.

<Image recording apparatus>

An image recording apparatus that is used in the image recording method according to the present disclosure includes an ink jet head for applying the ink onto the base material for image recording, a base material heating mechanism for heating a surface of the base material for image recording, onto which the ink is landed, to 30°C or higher, and an irradiation device for irradiating the ink applied onto the base material for image recording with active energy ray X.

With the image recording apparatus, the same effects as those of the image recording method of the present disclosure are exhibited.

<Example of image recording apparatus>

Hereinafter, an example of an image recording apparatus for performing the image recording method of the present disclosure will be described with reference to the drawings.

However, the image recording apparatus is not limited to the following example.

Fig. 1 is a diagram conceptually showing an image recording apparatus 10 which is an example of an image recording apparatus used in the image recording method of the present disclosure.

As shown in Fig. 1, an image recording apparatus 10, which is an ink jet recording apparatus according to the present example, is, in a general sense, an ink jet recording apparatus comprising a transport mechanism that transports a base material for image recording in a rollto-roll method, and in detail, is an apparatus that unwinds a base material 11 for image recording having a long film shape wound in a roll shape, transports the unwound base material 11 in a direction of an arrow in a state where a tension is applied, causes the base material 11 to pass through a base material heating mechanism 14, an ink jet head 12, an irradiation device E1 for irradiation with active energy ray X, and an irradiation device E2 for irradiation with active energy ray Y, and finally winds the base material 11 in a state where a tension is applied.

The base material 11 for image recording is transported in a state where tension is applied and is wound in a state where tension is applied. The tension during the transport may be the same tension as the tension during the winding or may be a tension different from the tension. In addition, the tension may vary depending on the position in the transport direction, or may be uniform. The base material 11 for image recording may comprise a tension adjusting means (for example, a dancer roll, a tension controller, or the like) for adjusting the tension applied to the base material 11 for image recording.

Since Fig. 1 is a conceptual diagram, the transport path of the base material 11 for image recording is simplified, and the base material 11 for image recording is shown as being transported in one direction. Needless to say, the actual transport path of the base material 11 for image recording may meander.

As a transport method of the base material 11 for image recording, various web transport methods such as a cylinder and a roll can be appropriately selected.

The base material heating mechanism 14 is a mechanism for heating the base material 11 for image recording to which the ink is applied in advance before the ink is applied.

Specific examples of the base material heating mechanism 14 include a rubber heater, a hot plate, a heating furnace, a hot air drying device, and an infrared heating device.

The base material heating mechanism 14 is provided from a region upstream of the ink jet head 12 (specifically, upstream of the base material 11 for image recording in the transport direction, and the same applies hereinafter) to a region downstream of the irradiation device E1 (specifically, downstream of the base material 11 for image recording in the transport direction, and the same applies hereinafter). In other words, the inkjet head 12 and the irradiation device E1 are arranged in this order in the middle of the base material 11 for image recording passing through the base material heating mechanism 14. With these configurations, in the image recording apparatus 10, the base material heating mechanism 14 can heat the base material 11 for image recording in advance such that the temperature of the ink landing surface of the base material 11 for image recording at the point in time of the ink landing is 30°C or higher.

The ink jet head 12 is a line head for applying an ink to the base material 11 for image recording in the middle of passing through the base material heating mechanism 14.

The ink jet head 12 is disposed such that a longitudinal direction of the ink jet head 12 intersects (for example, substantially orthogonal to) a transport direction of the base material 11 for image recording.

In the inkjet head 12, recording elements are arranged to correspond to the entire width direction of the base material 11 for image recording. In this manner, the ink can be applied over the entire width direction of the base material 11 for image recording to be transported.

A resolution of the ink jet head 12 is preferably 300 dpi or more (more preferably 600 dpi or more, and still more preferably 800 dpi or more). Here, dpi is an abbreviation for dot per inch, and 1 inch is 2.54 cm.

From the viewpoint of obtaining a high-definition image, the amount of liquid droplets of the ink jetted from nozzles of the ink jet head 12 is preferably 1 picoliter (pL) to 10 pL, and more preferably 1.5 pL to 6 pL.

The ink jet heads 12 may be arranged in a plurality of rows in the transport direction of the base material 11 for image recording. In this manner, image recording using two or more colors of ink can be performed.

The irradiation device E1 is a device for irradiating the ink 13 applied onto the base material 11 for image recording with the active energy ray X.

The position of the irradiation device E1 is not particularly limited as long as it is downstream of the ink jet head 12.

The position of the irradiation device E1 is, for example, a position in the middle of the base material 11 for image recording passing through the base material heating mechanism 14, as shown in Fig. 1. In this manner, it is easy to adjust the time from the point in time of the ink landing to the irradiation with the active energy ray X in a range of 0.05 seconds to 15.00 seconds.

The irradiation device E2 is a device for further irradiating the image obtained by the irradiation of the ink 13 with the active energy ray X with the active energy ray Y.

The position of the irradiation device E2 is not particularly limited as long as the irradiation device E2 is provided downstream of the irradiation device E1.

The position of the irradiation device E2 is, for example, a position further downstream of an end part of the base material heating mechanism 14 as shown in Fig. 1.

The preferred aspects of the active energy ray X and the active energy ray Y are as described above.

[Manufacturing method of laminate]

A manufacturing method of a laminate according to the present disclosure includes a step of obtaining an image recorded material in which the image is recorded on the base material for image recording by the image recording method according to the present disclosure described above, and a laminating step of laminating a base material for lamination containing a polymer containing vinyl chloride as a constitutional unit on the image in the image recorded material directly or through another layer.

The manufacturing method of a laminate according to the present disclosure may include other steps, as necessary.

<Step of obtaining image recorded material>

The preferred aspect of the step of obtaining an image recorded material is the same as the preferred aspect of the image recording method of the present disclosure described above.

<Laminating step>

The laminating step is a step of laminating a base material for lamination containing a polymer containing vinyl chloride as a constitutional unit on the image in the image recorded material directly or through another layer.

Examples of the other layer include an adhesive layer.

In the manufacturing method of a laminate according to the present disclosure, it is preferable that other layers are not provided.

That is, it is preferable that the base material for lamination is directly laminated on the image (that is, the base material for lamination is laminated such that the image and the base material for lamination are in contact with each other).

As a result, a laminate having a laminated structure of base material for image recording/image/base material for lamination is obtained.

In the laminating step, it is preferable that the image and the base material for lamination are subjected to thermal fusion welding at a temperature of 100°C or higher. In a case where the weighted average value of glass transition temperatures of all the polymerizable monomers contained in the ink as homopolymers is 0°C to 100°C, the image and the base material for lamination are thermocompression-bonded to each other by performing thermal fusion welding at a temperature of 100°C or higher, and the adhesiveness between the image and the base material for lamination is improved.

From the viewpoint of suppressing thermal decomposition, the upper limit value of the temperature in a case of performing the thermal fusion welding is preferably 200°C, more preferably 160°C, and still more preferably 140°C.

The temperature during the thermal fusion welding means a surface temperature of the base material for lamination.

A pressure during the thermal fusion welding is preferably 0.1 MPa to 20 MPa and more preferably 0.5 MPa to 15 MPa.

The time for thermal fusion welding is, for example, 10 seconds to 500 seconds.

The thermal fusion welding may be carried out in two stages. For example, a pressure at the first stage may be set to 0.5 MPa to 5 MPa, and a pressure at the second stage may be set to 6 MPa to 15 MPa, which is higher than the pressure at the first stage.

The laminate obtained by the manufacturing method of a laminate according to the present disclosure can be used, for example, as a floor material or a wall material of a transportation device (railway, bus, or the like), or a floor material or a wall material of a building.

Examples

Hereinafter, the present disclosure will be described in more detail using Examples. However, the present disclosure is not limited to the following examples as long as it does not exceed the gist of the present invention.

[Examples 1 to 16 and Comparative Examples 1 to 3]

<Preparation of ink>

The components shown in Tables 1 and 2 were mixed to have the contents shown in Tables 1 and 2, thereby preparing inks.
In Tables 1 and 2, a blank means that the corresponding component is not contained.
The details of each component in Tables 1 and 2 are as follows.

(Polymerizable monomer A)

   · EOEOEA ... ethoxydiethylene glycol acrylate
   · CHA ... cyclohexyl acrylate
   · LA ... lauryl acrylate

(N-vinyl compound)

•    NVC ... N-vinylcaprolactam

(Other monomers)

   · IOA ... isooctyl acrylate
   · DVE-3 ... triethylene glycol divinyl ether

(Colorant)

   · MB7080K ... "Microlith BLUE 7080K", PVC-VA resin-coated cyan pigment, manufactured by DIC Corporation.

This PVC-VA resin-coated cyan pigment is obtained by coating a crude pigment (here, Pigment Blue 15:3) with a poly(vinyl chloride-co-vinyl acetate) resin (that is, a vinylchloride/vinyl acetate copolymer resin). The proportion of the crude pigment in the PVC-VA resin-coated pigment is 50% by mass.
The amounts in Tables 1 and 2 are the amounts as the crude pigments.

•    PB15:3 ... Cyan pigment "Pigment Blue 15:3" manufactured by Dainichiseika Color & Chemicals Mfg. Co., Ltd.

(Dispersant)

•    BYK-168 ... Pigment dispersant manufactured by BYK-Chemie GmbH, product name "DISPERSE BYK-168"

(Photopolymerization initiator)

· ITX: 2-isopropylthioxanthone

·Omni. 819: bis(2,4,6-trimethylbenzoyl)phenylphosphine oxide (product name "Omnirad 819", manufactured by IGM Resins B.V.)

· TPO: 2,4,6-trimethylbenzoyldiphenylphosphine oxide (product name "Omnirad TPO-H", manufactured by IGM Resins B.V.)

(Polymerization inhibitor)

· TEMPOL: 4-hydroxy-2,2,6,6-tetramethylpiperidine-1-oxyl

<Image recording>

An ink jet transport device manufactured by HYLON Co., Ltd. was modified to prepare the image recording apparatus 10 shown in Fig. 1 described above.

As the ink jet head 12, MH5420 manufactured by Ricoh Co., Ltd. was used.

As the irradiation device E1 for irradiating with the active energy ray X and the irradiation device E2 for irradiating with the active energy ray Y, an ultraviolet (UV) irradiation device having a peak wavelength of 395 nm and a maximum output of 10 W/cm$^2$ was used.

The irradiation device E1 was disposed in the middle of a state where the base material 11 for image recording passed through the base material heating mechanism 14.

The irradiation device E2 was disposed at a position further downstream of the end part of the base material heating mechanism 14.

As the base material heating mechanism 14, a rubber heater (SR100 manufactured by Three High Co., Ltd.) was used.

A base material 11 for image recording, which is a long-shaped polyvinyl chloride base material (product name "PVC35phr", manufactured by Okamoto Industries, Inc.) was used.

A roll of the base material 11 for image recording was set in the image recording apparatus 10, and the above-described ink was set in an ink supply unit (not shown) connected to the ink jet head 12.

The base material 11 for image recording was unwound from the roll and transported, and the base material 11 for image recording was heated, had ink applied thereto, irradiated with the active energy ray X, and irradiated with the active energy ray Y (however, in Example 12, the irradiation with the active energy ray Y was omitted), and then the base material 11 for image recording was wound up.

Specifically, the heating by the base material heating mechanism 14 was started before the application of the ink to the region to which the ink was applied. In this manner, the temperature (°C) of the ink landing surface of the base material for image recording at the point in time of the ink landing was adjusted to the values shown in Table 1 and Table 2.

Next, the ink was applied in the form of a solid image from the ink jet head 12 to the base material 11 for image recording being heated by the base material heating mechanism 14, and the active energy ray X (UV) was emitted from the irradiation device E1 to the applied ink during the heating. The ink was applied at a resolution of 600 dpi (dot per inch) × 600 dpi.

Thereafter, after the region of the ink irradiated with the active energy ray X passed through the base material heating mechanism 14, the region was irradiated with the active energy ray Y from the irradiation device E2 (however, in Example 12, this step was omitted), and a solid image was obtained. As described above, an image recorded material which is the base material 11 for image recording on which a solid image is recorded was obtained. Next, the image recorded material was wound up.

The base material 11 for image recording was transported in a state where tension was applied to the base material 11 for image recording.

The tension of the base material 11 for image recording was adjusted to 50 N/m.

The temperature (°C) of the surface of the base material for image recording on which the ink was landed at the point in time of the ink landing,

time (seconds) from the point in time of the ink landing to the irradiation with the active energy ray X,
illuminance (W/cm$^2$) of the active energy ray X, and

presence or absence of the irradiation with the active energy ray Y were adjusted as shown in Tables 1 and 2, respectively.

Here, the temperature of the ink landing surface of the base material for image recording at the point in time of the ink landing was adjusted by adjusting the output of the rubber heater as the base material heating mechanism 14. The temperature of the ink landing surface was measured with an infrared radiation thermometer (manufactured by A&D Company Limited).

The time from the point in time of the ink landing to the irradiation with the active energy ray X was adjusted by adjusting the transportation speed of the base material for image recording in a range of 2 m/min to 120 m/min and adjusting the distance between the ink jet head 12 and the irradiation device E1 (specifically, the distance between the center portion of the ink jet head 12 and the center portion of the irradiation device E1 in the transportation direction) in a range of 0.08 m to 0.53 m.

The illuminance of the active energy ray X was adjusted by adjusting the output of the irradiation device E1. The illuminance of the active energy ray X was measured using UV Power map, and the UVA illuminance and the UVV illuminance were measured, and the sum of the respective measured values (UVA illuminance + UVV illuminance) was obtained. That is, the sum of the respective measured values (UVA illuminance + UVV illuminance) was defined as the illuminance of the active energy ray X.

The presence or absence of the irradiation with the active energy ray Y was determined by opening and closing the shutter.

The illuminance of the active energy ray Y was adjusted by adjusting the output of the irradiation device E2. The illuminance of the active energy ray Y was fixed to 2.0 (W/cm$^2$) throughout all Examples and all Comparative Examples. The illuminance of the active energy ray Y was also measured in the same manner as the illuminance of the active energy ray X.

The time from the irradiation with the active energy ray X to the irradiation with the active energy ray Y was adjusted by adjusting the transport speed of the base material for image recording in a range of 2 m/min to 120 m/min and adjusting the distance between the irradiation device E1 and the irradiation device E2 (specifically, the distance between the center portion of the irradiation device E1 and the center portion of the irradiation device E2 in the transport direction) in a range of 0.1 m to 5.0 m.

In the example group (except for Example 12) and the comparative example group, the time from the irradiation with the active energy ray X to the irradiation with the active energy ray Y was in a range of 3.0 seconds to 10.0 seconds.

<Laminating step>

A polyvinyl chloride base material (product name "SG800", manufactured by KN Trading Co., Ltd., thickness: 75 μm) as a base material for lamination was disposed on the solid image in the image recorded material obtained above (that is, the base material for image recording on which the solid image was recorded), and the image recorded material and the base material for lamination were laminated (that is, subjected to thermal fusion welding) using a desktop automatic transfer press machine (product name "AF-54TEN", Asahi Seiki Kogyo Co., Ltd.). As a result, a laminate having a laminated structure of base material for lamination/image/base material for image recording was obtained.

Here, a laminating temperature (thermal fusion welding temperature) was set to 130°C.

Specifically, the lamination was performed by first performing thermal fusion welding for 300 seconds at a laminating pressure of 2 MPa and then performing thermal fusion welding for 60 seconds at a laminating pressure of 10 MPa.

<Evaluation>

Using the image recorded material obtained above, the laminate peel strength was measured as follows.

In addition, the base material deformation was evaluated using the base material for image recording after the active energy ray X irradiation in the image recording.

These results are shown in Table 1 and Table 2.

(Laminate peel strength)

By changing the operation in the above-described laminating step as follows, a sample for evaluating the laminate peel strength was produced.

A sample piece of 3.2 cm × 3.2 cm (hereinafter, referred to as an "image recorded material sample piece") was collected from a region where the solid image in the image recorded material obtained above was recorded.

Similarly, a sample piece of 3.2 cm × 3.2 cm (hereinafter, referred to as a "base material sample piece for lamination") was collected from the base material for lamination.

A polyethylene terephthalate (PET) sheet having a thickness of 12 μm was disposed on a solid image on the image recorded material sample piece, in a region of 1.0 cm × 3.2 cm including one side of the image recorded material sample piece.

Next, a base material sample piece for lamination having a size of 3.2 cm × 3.2 cm was superimposed on both the region (region of 1.0 cm × 3.2 cm) where the PET sheet was disposed and the remaining region (region of 2.2 cm × 3.2 cm) on the solid image in the image recorded material sample piece. In this state, the image recorded material sample piece and the base material sample piece for lamination were laminated (that is, subjected to thermal fusion welding) under the same conditions as the conditions in the above-described laminating step. By removing the PET sheet from the obtained laminate, a sample for evaluating the peel strength was obtained.

In the sample for evaluating the peel strength, in the above-described remaining region (that is, the region of 2.2 cm × 3.2 cm where the PET sheet was not disposed), the solid image in the image recorded material sample and the base material sample piece for lamination were subjected to thermal fusion welding.

On the other hand, in the sample for evaluating a peel strength, in a region (region of 1.0 cm × 3.2 cm) where a PET sheet was disposed before lamination and the PET sheet was removed after lamination, the solid image in the image recorded material sample piece and the base material sample piece for lamination were not subjected to thermal fusion welding.

Next, a tensile test of pulling a region (a region of 1.0 cm × 3.2 cm) of the image recorded material sample piece, in which the thermal fusion welding had not been performed, and a region (a region of 1.0 cm × 3.2 cm) of the laminated base material sample piece, in which the thermal fusion welding had not been performed, in opposite directions (that is, a direction of T-type peeling) was performed on the sample for evaluating the peel strength, and the laminate peel strength was measured. The tensile test was carried out using a tensile tester (product name "Autograph AGS-X 5KN", manufactured by Shimadzu Corporation).

The above operation was performed on two samples for evaluating the peel strength, and the average value of the obtained two laminate peel strengths was adopted as the laminate peel strength in the example or comparative example.

Based on the adopted laminate peel strength (average value of two times), the laminate peel strength was evaluated according to the following evaluation standards.

In the following evaluation standard, the rank of the most excellent laminate peel strength is 5.

- Evaluation standard for laminate peel strength -

5: The laminate peel strength is 7 N/cm or more.
4: The laminate peel strength is 3 N/cm or more and less than 7 N/cm.
3: The laminate peel strength is 2 N/cm or more and less than 3 N/cm.
2: The laminate peel strength is 1 N/cm or more and less than 2 N/cm.
1: The laminate peel strength is 0.1 N/cm or more and less than 1 N/cm.
0: The laminate peel strength is less than 0.1 N/cm.

(Evaluation of base material deformation suppression)

For the region to which the ink of the base material for image recording was applied immediately after the active energy ray X irradiation (within 5 minutes after the irradiation) in the image recording, the height difference in the plane was measured, and the base material deformation suppression was evaluated according to the following evaluation standard based on the obtained result.

The difference in height in the plane is considered to occur due to the reaction heat of the ink (image) caused by the irradiation with the active energy ray X.

In the following evaluation standard, the rank of the most excellent base material deformation suppression (that is, the most suppressed base material deformation) is 5.

- Evaluation standard for base material deformation suppression -

5: The difference in height in a plane is less than 0.5 mm.
4: The difference in height in a plane is 0.5 mm or more and less than 1 mm.
3: The difference in height in a plane is 1 mm or more and less than 2 mm.
2: The difference in height in a plane is 2 mm or more and less than 3 mm.

The evaluation results are shown in Tables 1 and 2.

In Tables 1 and 2, the SP value, the molecular weight, and the glass transition temperature (Tg) of the polymerizable monomer A, the N-vinyl compound, and the other monomers are described.

In Tables 1 and 2, "weighted average value of Tg of all monomers in the ink as homopolymers" means a weighted average value of glass transition temperatures in a case where all polymerizable monomers contained in the ink are homopolymers.

[Table 1]

| | | | SP value | Molecular weight | Tg (°C) | Example 1 | Example 2 | Example 3 | Example 4 | Example 5 | Example 6 | Example 7 | Example 8 | Example 9 |
|---|---|---|---|---|---|---|---|---|---|---|---|---|---|---|
| Component of ink (part by mass) | Polymer monomer A | EOEOEA | 18.2 | 188 | -54 | 18.2 | 18.2 | 18.2 | 18.2 | 18.2 | 18.2 | 18.2 | 18.2 | 18.2 |
| | | CHA | 17.9 | 154 | 15 | 45.6 | 45.6 | 45.6 | 45.6 | 45.6 | 45.6 | 45.6 | 45.6 | 45.6 |
| | | LA | 16.7 | 240 | -30 | | | | | | | | | |
| | N-vinyl compound | NVC | 19.2 | 139 | 90 | 27.3 | 27.3 | 27.3 | 27.3 | 27.3 | 27.3 | 27.3 | 27.3 | 27.3 |
| | Other monomers | IOA | 16.4 | 184 | -54 | | | | | | | | | |
| | | DVE-3 | 17.2 | 202 | 10 | | | | | | | | | |
| | Colorant | PB15:3 | | - | | | | | | | | | | |
| | | MB7080K | | - | | 1.0 | 1.0 | 1.0 | 1.0 | 1.0 | 1.0 | 1.0 | 1.0 | 1.0 |
| | Disperant | BYK-168 | | - | | | | | | | | | | |
| | Photopolymerization initiator | ITX | | - | | 2.0 | 2.0 | 2.0 | 2.0 | 2.0 | 2.0 | 2.0 | 2.0 | 2.0 |
| | | Omni.819 | | - | | 2.8 | 2.8 | 2.8 | 2.8 | 2.8 | 2.8 | 2.8 | 2.8 | 2.8 |
| | | TPO | | - | | 2.8 | 2.8 | 2.8 | 2.8 | 2.8 | 2.8 | 2.8 | 2.8 | 2.8 |
| | Polymerization inhibitor | TEMPOL | | - | | 0.3 | 0.3 | 0.3 | 0.3 | 0.3 | 0.3 | 0.3 | 0.3 | 0.3 |
| Weighted average value of Tg of all monomers in ink as homopolymers (°C) | | | | | | 23.7 | 23.7 | 23.7 | 23.7 | 23.7 | 23.7 | 23.7 | 23.7 | 23.7 |
| Image recording step | Temperature of ink landing surface of base material for image recording at point in time of ink landing (°C) | | | | | 40 | 30 | 35 | 45 | 50 | 40 | 40 | 40 | 40 |
| | Time from point in time of ink landing to irradiation with active energy ray X (second) | | | | | 0.20 | 0.20 | 0.20 | 0.20 | 0.20 | 0.04 | 3.00 | 10.00 | 16.00 |
| | Illuminance of active energy ray X (W/cm²) | | | | | 0.15 | 0.15 | 0.15 | 0.15 | 0.15 | 0.15 | 0.15 | 0.15 | 0.15 |
| | Presence or absence of active energy ray Y | | | | | Present | Present | Present | Present | Present | Present | Present | Present | Present |
| Evaluation | Laminate peel strength | | | | | 5 | 4 | 5 | 5 | 4 | 3 | 5 | 4 | 3 |
| | Base material deformation suppression | | | | | 5 | 5 | 5 | 5 | 4 | 5 | 5 | 5 | 5 |

[Table 2]

| | | | SP value | Molecular weight | Tg (°C) | Example 10 | Example 11 | Example 12 | Example 13 | Example 14 | Example 15 | Example 16 | Comparative Example 1 | Comparative Example 2 | Comparative Example 3 |
|---|---|---|---|---|---|---|---|---|---|---|---|---|---|---|---|
| Component of ink (part by mass) | Polymerizable monomer A | EOEOEA | 18.2 | 188 | -54 | 18.2 | 18.2 | 18.2 | | 9.1 | 45.6 | 16.8 | 18.2 | | 18.2 |
| | | CHA | 17.9 | 154 | 15 | 45.6 | 45.6 | 45.6 | 45.6 | 82.0 | 27.3 | 41.9 | 54.7 | | 54.7 |
| | | LA | 16.7 | 240 | -30 | | | | 18.2 | | | | | | |
| | N-vinyl compound | NVC | 19.2 | 139 | 90 | 27.3 | 27.3 | 27.3 | 27.3 | | 18.2 | 25.1 | 27.3 | | 27.3 |
| | Other monomers | IOA | 16.4 | 184 | -54 | | | | | | | | | 91.1 | |
| | | DVE-3 | 17.2 | 202 | 10 | | | | | | | 4.2 | | | |
| | Colorant | PB15:3 | | - | | | | | | | | 2.5 | | | |
| | | MB 7080K | | - | | 1.0 | 1.0 | 1.0 | 1.0 | 1.0 | 1.0 | | 1.0 | 1 | 1.0 |
| | Dispersant | BYK-168 | | - | | | | | | | | 1.7 | | | |
| | Photopolymerization initiator | ITX | | - | | 2.0 | 2.0 | 2.0 | 2.0 | 2.0 | 2.0 | 2.0 | 2.0 | 2 | 2.0 |
| | | Omni.819 | | - | | 2.8 | 2.8 | 2.8 | 2.8 | 2.8 | 2.8 | 2.8 | 2.8 | 2.8 | 2.8 |
| | | TPO | | - | | 2.8 | 2.8 | 2.8 | 2.8 | 2.8 | 2.8 | 2.8 | 2.8 | 2.8 | 2.8 |
| | Polymerization inhibitor | TEMPOL | | - | | 0.3 | 0.3 | 0.3 | 0.3 | 0.3 | 0.3 | 0.3 | 0.3 | 0.3 | 0.3 |
| Weighted average value of Tg of all monomers in ink as homopolymers (°C) | | | | | | 23.7 | 23.7 | 23.7 | 28.5 | 8.1 | -4.5 | 23.1 | 22.9 | -54.0 | 22.9 |
| Image recording step | Temperature of ink landing surface of base material for image recording at point in time of ink landing (°C) | | | | | 40 | 40 | 40 | 40 | 40 | 40 | 40 | 20 | 40 | 20 |
| | Time from point in time of ink landing to irradiation with active energy ray X (second) | | | | | 0.20 | 0.20 | 0.20 | 0.20 | 0.20 | 0.20 | 0.20 | 0.20 | 0.20 | 0.20 |
| | Illuminance of active energy ray X (W/cm$^2$) | | | | | 0.30 | 1.00 | 0.15 | 0.15 | 0.15 | 0.15 | 0.15 | 0.15 | 0.15 | 1.00 |
| | Presence or absence of active energy ray Y | | | | | Present | Present | Absent | Present | Present | Present | Present | Present | Present | Present |
| Evaluation | Laminate peel strength | | | | | 5 | 4 | 4 | 4 | 3 | 4 | 5 | 2 | 1 | 2 |
| | Base material deformation suppression | | | | | 5 | 3 | 5 | 5 | 5 | 5 | 5 | 5 | 5 | 5 |

As listed in Tables 1 and 2, in Examples 1 to 16 in which the temperature of the ink landing surface of the base material for image recording at the point in time of the ink landing was 30°C or higher and the ink contained the polymerizable monomer A having a (meth)acryloyl group and a solubility parameter of 16.5 MPa$^{1/2}$ to 21.3 MPa$^{1/2}$, an image recorded material having an excellent laminate peel strength was obtained.

In Comparative Examples 1 and 3 in which the temperature of the ink landing surface of the base material for image recording at the point in time of the ink landing was lower than 30°C and in Comparative Example 2 in which the ink does not contain the polymerizable monomer A, the laminate peel strength of the image recorded material was insufficient.

From the results of Examples 2 to 5, it was found that in a case where the temperature of the surface of the base material for image recording, on which the ink is landed, at the point in time of the ink landing is in a range of 35°C to 45°C (Examples 3 and 4), the laminate peel strength of the image recorded material is more excellent.

From the results of Examples 6 to 9, it was found that in a case where the time from the point in time of the ink landing to the irradiation with the active energy ray X was 0.05 seconds to 15.00 seconds (Examples 7 and 8), the laminate peel strength of the image recorded material was more excellent.

From the results of Examples 7 and 8, it was found that in a case where the time from the ink landing to the irradiation with the active energy ray X was 0.05 seconds to 3.00 seconds (Example 7), the laminate peel strength of the image recorded material was more excellent.

From the results of Examples 10 and 11, it was found that in a case where the illuminance of the active energy ray X with which the ink was irradiated was 0.30 W/cm$^2$ or less (Example 10), the laminate peel strength of the image recorded material was more excellent, and the deformation of the base material was further suppressed.

From the results of Examples 1 and 12, it was found that in a case where the image obtained by the irradiation of the ink with the active energy ray X was further irradiated with the active energy ray Y (Example 1), the laminate peel strength of the image recorded material was more excellent.

From the results of Examples 1 and 13, it was found that in a case where the molecular weight of the polymerizable monomer A was 215 or less (Example 1), the laminate peel strength of the image recorded material was more excellent.

From the results of Examples 1 and 14, it was found that in a case where the ink contained the N-vinyl compound (Example 1), the laminate peel strength of the image recorded material was more excellent.

From the results of Examples 1 and 14, it was found that in a case where the weighted average value of Tg of all the monomers in the ink as homopolymers was 0°C to 100°C (Example 1), the laminate peel strength of the image recorded material was more excellent.

The entire disclosure of Japanese Patent Application No. 2023-43644, filed March 17, 2023, is incorporated into the present specification by reference.

All publications, patent applications, and technical standards described in the present specification are herein incorporated by reference to the same extent as in a case where each publication, each patent application, and each technical standard are specifically and individually indicated to be incorporated by reference.

**Claims**

1. An image recording method comprising:

   an image recording step of applying an ink onto a base material for image recording, which contains a polymer containing vinyl chloride as a constitutional unit, by an ink jet recording method, and irradiating the ink applied onto the base material for image recording with active energy ray X to obtain an image,
   wherein, in the image recording step, a temperature of a surface of the base material for image recording, onto which the ink is landed, is 30°C or higher at a point in time when the ink is landed on the base material for image recording, and
   the ink contains a polymerizable monomer A having a (meth)acryloyl group and a solubility parameter of 16.5 MPa$^{1/2}$ to 21.3 MPa$^{1/2}$, and a colorant.

2. The image recording method according to claim 1,
   wherein, in the image recording step, the temperature of the surface of the base material for image recording, onto which the ink is landed, is 35°C to 45°C at a point in time when the ink is landed on the base material for image recording.

3. The image recording method according to claim 1,
   wherein a time from a point in time when the ink has landed on the base material for image recording to a point in time when the ink is irradiated with the active energy ray X is 0.05 seconds to 15.00 seconds.

4. The image recording method according to claim 1,
   wherein a time from a point in time when the ink has landed on the base material for image recording to a point in time when the ink is irradiated with the active energy ray X is 0.05 seconds to 3.00 seconds.

5. The image recording method according to claim 1,
   wherein an illuminance of the active energy ray X with which the ink is irradiated is 0.30 W/cm$^2$ or less.

6. The image recording method according to claim 1,
   wherein the image recording step further includes irradiating the image obtained by the irradiation with the active energy ray X with active energy ray Y.

7. The image recording method according to claim 1,
   wherein the ink does not contain a solvent, or in a case where the ink contains a solvent, a content of the solvent is 5% by mass or less with respect to a total amount of the ink.

8. The image recording method according to claim 1,
   wherein a molecular weight of the polymerizable monomer A is 215 or less.

9. The image recording method according to claim 1,
   wherein the ink further contains an N-vinyl compound.

10. The image recording method according to claim 1,
    wherein a weighted average value of glass transition temperatures of all polymerizable monomers contained in the ink as homopolymers is 0°C to 100°C.

11. A manufacturing method of a laminate, comprising:

    a step of obtaining an image recorded material in which the image is recorded on the base material for image recording by the image recording method according to any one of claims 1 to 10; and
    a laminating step of laminating a base material for lamination containing a polymer containing vinyl chloride as a constitutional unit on the image in the image recorded material directly or through another layer.

12. The manufacturing method of a laminate according to claim 11,
    wherein, in the laminating step, the base material for lamination is directly laminated on the image.

13. An image recording apparatus that is used in the image recording method according to any one of claims 1 to 10, the image recording apparatus comprising:

    an ink jet head for applying the ink onto the base material for image recording;
    a base material heating mechanism for heating a surface of the base material for image recording, onto which the ink is landed, to 30°C or higher; and
    an irradiation device for irradiating the ink applied onto the base material for image recording with active energy ray X.

# FIG. 1

## INTERNATIONAL SEARCH REPORT

| International application No. |
| --- |
| **PCT/JP2024/009657** |

### A. CLASSIFICATION OF SUBJECT MATTER

**B41M 5/00**(2006.01)i; **B41J 2/01**(2006.01)i; **C09D 11/30**(2014.01)i
FI:    B41M5/00 100; B41M5/00 120; C09D11/30; B41J2/01 501; B41M5/00 134; B41M5/00 132; B41J2/01 129

According to International Patent Classification (IPC) or to both national classification and IPC

### B. FIELDS SEARCHED

Minimum documentation searched (classification system followed by classification symbols)

B41M5/00; B41J2/01; C09D11/30

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | WO 2019/087807 A1 (FUJIFILM CORPORATION) 09 May 2019 (2019-05-09) paragraphs [0008]-[0200] | 1-13 |
| Y | JP 2014-24941 A (KONICA MINOLTA, INC.) 06 February 2014 (2014-02-06) paragraphs [0219]-[0253] | 1-13 |

☐ Further documents are listed in the continuation of Box C.        ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| --- | --- |
| **10 May 2024** | **28 May 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT
### Information on patent family members

| International application No. |
| PCT/JP2024/009657 |

| Patent document cited in search report | Publication date (day/month/year) | Patent family member(s) | Publication date (day/month/year) |
|---|---|---|---|
| WO 2019/087807 A1 | 09 May 2019 | (Family: none) | |
| JP 2014-24941 A | 06 February 2014 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021161182 A
- JP 2002012607 A
- JP 2002188025 A
- JP 2003026978 A
- JP 2003342503 A
- JP 2011225848 A
- JP 2009 A
- JP 209352 A

- JP 2009209352 A
- JP 54059936 A
- JP S5459936 A
- JP 2003306623 A
- JP 60132767 A
- JP S60132767 A
- JP 2023043644 A

**Non-patent literature cited in the description**

- Industrial Organic Pigments. **W. HERBST** ; **K. HUNGER**. Encyclopedia of Pigments. 2000